Europäisches Patentamt

(19) European Patent Office

Office européen des brevets

(11) Publication number: **0 014 518**

A1

## (12) EUROPEAN PATENT APPLICATION

(21) Application number: **80300073.6**

(22) Date of filing: **08.01.80**

(51) Int. Cl.³: **B 29 D 27/02**

(30) Priority: **05.02.79 GB 7904011**

(43) Date of publication of application:
**20.08.80 Bulletin 80/17**

(84) Designated Contracting States:
**AT CH DE FR GB IT SE**

(71) Applicant: **IMPERIAL CHEMICAL INDUSTRIES LIMITED**
**Imperial Chemical House Millbank**
**London SW1P 3JF(GB)**

(72) Inventor: **Bowyer, David Brian**
**6 Dickens Street**
**Morside Oldham, Lancs OL1 4SF(GB)**

(74) Representative: **Houghton, Malcolm John et al,**
**Imperial Chemical Industries Limited Legal Department:**
**Patents Thames House North Millbank**
**London SW1P 4QG(GB)**

(54) **Process and apparatus for moulding foamed articles and the articles so moulded.**

(57) Moulding is achieved by progressively distributing a liquid stream of plastics ingredients over a mould surface patterned in high relief, by variably deflecting the liquid stream.

A mould 11 has an inlet 23 located over a fully retractable, deflector post 25 extending through a fluid-tight seal 27. In synchronism with the injection of the liquid stream, the deflector post is retracted or extended within the mould so that the liquid is fanned-out on impingement with the deflection surface 29 to form, successively, annular spray bands of steadily decreasing or increasing mean radii across the mould base.

The invention is especially applicable to the moulding of highly resilient polyurethane foams.

Fig .1.

EP 0 014 518 A1

1                    Du.30620/EP

APPLICANTS

IMPERIAL CHEMICAL INDUSTRIES LIMITED

TITLE

PROCESS AND APPARATUS FOR MOULDING FOAMED
ARTICLES AND THE ARTICLES SO MOULDED.

Du.30620

This invention relates to a process for moulding foamed plastics articles, especially such articles having embossed or patterned faces, to apparatus for carrying out the process and to the articles so obtained.

According to our invention we provide a process for the manufacture of plastics articles which comprises injecting a plastics foam-forming liquid stream into a mould, progressively distributing the liquid over a surface of the mould by variably deflecting the liquid stream, and allowing the liquid to foam to fill the mould and set.

Any plastics foam-forming liquid may be used in the process of the invention but we are mainly interested in using liquids for forming polyurethane foams, and especially flexible polyurethane foams of high resilience suitable for the moulding of deeply patterned mattresses.

The liquids are prepared by methods well known to those skilled in the technology of the particular foamed plastics material to be used.

In a preferred process, the liquid is fanned out on deflection to form, successively, annular spray bands of steadily increasing or decreasing mean radii until the required distribution over the mould surface is achieved.

The liquid may be injected into the mould at high or low pressure as the pressure necessary to produce an effective spray is relatively low.

An advantage of the process of the invention is that progressive distribution of a liquid over a mould surface can be obtained without the need for expensive traversing spray equipment and can be used with a closed mould to avoid unhealthy working conditions where hazardous plastics foam-forming liquids, such as toxic polyurethane mixtures, are used.

In particular, our invention provides a process for moulding foamed plastics articles having an embossed or patterned face in which the liquid is distributed over a mould surface patterned in high relief. Such articles of interest to us are highly resilient flexible polyurethane foam mattresses which are formed in a mould having on the base of the mould a honeycomb pattern, in high relief, with hexagonal or circular interstices.

In moulding such articles, uniform distribution of the polyurethane foam-forming liquid is not critical; it is important only that sufficient liquid is sprayed into each interstice to fill that interstice, from the bottom upwards with foamed material. If liquid overflows from a first to a second inadequately filled interstice, a void may be formed in the second interstice which is unacceptable in the finished product.

In a further aspect of our invention we provide apparatus suitable for carrying out our process which comprises a mould having an inner mould surface which defines a mould cavity, an inlet through which a plastics foam-forming liquid can be injected, and a moveable deflector, within the mould cavity, for continuously varying the distribution of the liquid during a moulding operation.

In our preferred apparatus, the moveable deflector comprises a post which extends through a fluid-tight seal into the mould cavity and which has a deflection surface, the post being retractable from a position in which the deflection surface is adjacent the inlet to a position in which said surface is flush with the mould surface.

By being fully retractable, the post does not disfigure the moulded article, and its deflection surface can conveniently be cleaned and sprayed with release agent as though part of the mould surface.

The post may be retracted by any suitable means external to the mould, such as a pneumatic or hydraulic mechanism or a mechanical screwjack. It may be programmed to start retracting at a predetermined time during injection of the liquid and, in the case of a polyurethane foam-forming liquid, to complete its retraction before the end of the cream time of the foam.

Conveniently, the inlet comprises an injection nozzle which protrudes into the mould cavity.

A mixing and dispensing head suitable for the particular plastics-forming material to be used and connectable to the mould inlet, may be permanently attached to the mould or detachably mounted for use with a series of moulds.

By way of example only, the invention is further described with reference to the accompanying drawings in which

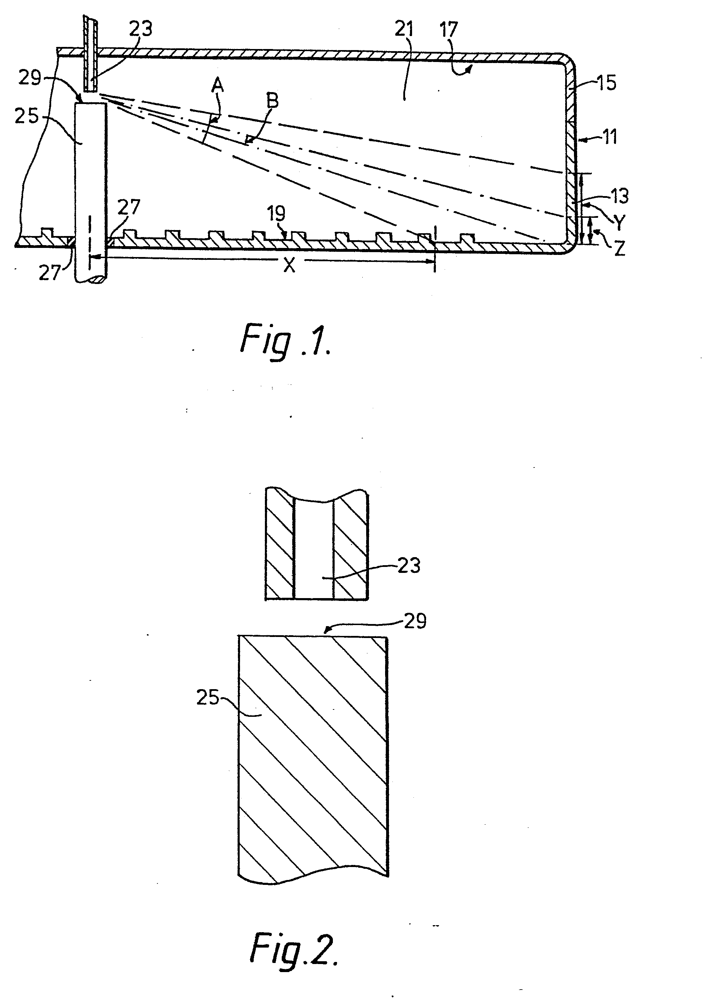

Figure 1 is a cross section through part of a mould; and      Figure 2 is a detail of Figure 1.

In the drawings, a two-part aluminium mould 11 comprises a base section 13 and lid 15 clamped together by means not shown. A mould surface 17, the lower part 19 of which is patterned in high relief, defines a mould cavity 21. Projecting into the mould cavity is an inlet 23 below which is a fully retractable, cylindrical deflector post 25 extending into the mould cavity through a fluid-tight seal 27 in the centre of the mould base section 13. The post 25 has a deflection surface 29, which, in the drawings, is shown adjacent the inlet 23, and is retractable hydraulically by means not shown. When the post is fully retracted, the deflection surface 29 is flush with the lower mould surface.

The operation of the mould is hereinafter described for moulding a flexible polyurethane foamed article, but it will be apparent that the mould can be used in similar fashion for any other foamed plastics article derived from liquid ingredients.

With the deflector post fully retracted, the inner mould surface and deflection surface 29 are cleaned from a previous moulding, sprayed with a wax release agent and the mould sections clamped together. A conventional high pressure mixing and dispensing gun for polyurethanes is connected to the mould inlet and, with the deflector post now fully extended, a flexible foam-forming liquid mixture is injected into the mould. In synchronism with the injection of the mixture, the deflector post is retracted so that the mixture is fanned-out on impingement with the deflection surface 29 to form, successively, annular spray bands of steadily decreasing mean radii. When the post is finally fully retracted, the mixture fills the centre of the lower mould surface.

After the mixture has foamed and set and has been partially cured, the article so formed is removed from the mould for completion of curing.

Alternatively, the deflector post is extended from its retracted position during injection of the liquid mixture into the mould. In this case the mixture is fanned out on impingement with the deflection surface 29 to form, successively, annular spray bands of steadily increasing mean radii. Immediately after the liquid mixture is injected the deflector post is fully retracted so that the deflection surface is flush with the mould surface.

For larger moulds, a plurality of inlets and corresponding deflectors may be used. The number and dimensions of the inlets and deflectors and their relative positions will not only depend on the size and shape of the mould but also on the viscosity of the plastics foam-forming liquid and the velocity at which it is injected into the mould.

The invention is illustrated by the following Examples.

Example 1

A solution of "Polycell" (RTM), having a viscosity of 650-800 cps (similar to that of a flexible polyurethane foam-forming mixture) was pumped at a rate of 104 litres per minute through a tube having a 10 mm bore and wall thickness of 7.5 mm, the tube being held vertically above a cylindrical post, having a diameter of 35 mm and height of 125 mm, at a distance of 6 mm. The post was positioned in one corner of a box, 1150 mm long, equivalent in size to a quarter of a full-size

00014518

mattress mould. The pressure in the tube adjacent to its outlet was approximately 30 psi and the solution fanned out to form an annular spray band (shown in Figure 1 subtended from angle 'A', which is less than 10°) having an inner radius ('X' in Figure 1) of 950 mm measured from the centre of the post. The outer radius was such that the outer edge of the spray band extended up that side of the box which is farthest from the post to a maximum height ('Y' in Figure 1) of 100 mm. The band easily reached the farthermost corner of the box. A more intense spray band (subtended from angle 'B' in Figure 1) had an outer edge extending up that side of the box which is farthest from the post to a maximum height ('Z' in Figure 1) of 50 mm.

Example 2

Resin and isocyanate were supplied at a pressure of 2500 psi to an impingement mixing head at a ratio of 100 to 36.7 by weight. Total flow was at a rate of 125.8 kg/min. A shot time of 10.5 seconds giving a shot weight of 22.0 kg was sufficient to fill a mould, described below, to the required foam density. The foam was introduced into the mould through a 14 mm diameter nozzle protruding through the centre of the mould lid and the stream of foamable liquid was distributed by interaction with the end of a 29 mm diameter post which protruded through the bottom of the mould. The gap between the end of the post and the lower face of the nozzle was varied during the shot in accordance with the following programme:-

| Time from start of shot (secs) | Gap (mm) |
|:---:|:---:|
| 0 | 75 |
| 1 | 35 |
| 2 | 25 |
| 4 | 13 |
| 7 | 6 |
| 10 | 3 |

At the conclusion of the shot, the post was retracted to leave its end face flush with the bottom of the mould.

The mould was 1.93 m long by 1.39 m wide, with a depth of 0.18 m. Its lower surface was shaped in the way described in Fig.2A of US Patent Specification 4073020, the patterning being between 30 and 40 mm deep.

Mouldings were made with good surface finish and with a minimum of air bubbles, showing that liquid had been distributed over the whole of the lower surface of the mould prior to foam rise.

0014518

## CLAIMS

1.      A process for the manufacture of plastics articles which comprises injecting a plastics foam-forming liquid stream into a mould, progressively distributing the liquid over a surface of the mould by variably deflecting the liquid stream, and allowing the liquid to foam to fill the mould and set.

2.      A process as claimed in claim 1 in which the liquid is fanned out on deflection to form, successively, annular spray bands of steadily increasing or decreasing mean radii until the required distribution over the mould surface is achieved.

3.      Apparatus suitable for carrying out the claimed process which comprises a mould having an inner mould surface which defines a mould cavity, an inlet through which a plastics foam-forming liquid can be injected, and a moveable deflector, within the mould cavity, for continuously varying the distribution of the liquid during a moulding operation.

4.      Apparatus as claimed in claim 3 in which the moveable deflector comprises a post which extends through a fluid-tight seal into the mould cavity and which has a deflection surface, the post being retractable from a position in which the deflection surface is adjacent the inlet to a position in which said surface is flush with the mould surface.

0014518

5.     A foamed plastics article whenever made by a process as claimed in claims 1 or 2 or in an apparatus as claimed in claims 3 or 4.

MJH/BH
2.1.80.

*Fig.1.*

*Fig.2.*

European Patent Office

EUROPEAN SEARCH REPORT

0014518

Application number

EP 80 30 0073

| | DOCUMENTS CONSIDERED TO BE RELEVANT | | CLASSIFICATION OF THE APPLICATION (Int. Cl. |
|---|---|---|---|
| Category | Citation of document with indication, where appropriate, of relevant passages | Relevant to claim | |
| | GB - A - 1 472 612 (BAYER)<br>* Page 3, lines 61-93; figure 2 *<br>--<br> | 1,3 | B 29 D 27/02 |
| A | GB - A - 1 398 464 (IKV)<br>* Figure 2 *<br>---- | 1 | |

TECHNICAL FIELDS SEARCHED (Int Cl

B 29 D 27/00

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 09-05-1980 | SCHMIDL |

EPO Form 1503.1 06.78